# FASCICULE DE BREVET EUROPEEN

(11) **EP 2 736 793 B1**
(45) Date de publication et mention de la délivrance du brevet: **12.08.2015**
(21) Numéro de dépôt: 12737835.4
(22) Date de dépôt: 24.07.2012
(51) Int. Cl.: B62D 21/15, B62D 25/08

(54) **MODULE DE FACE AVANT DE VEHICULE AUTOMOBILE**
KOPFMODUL FÜR EIN KRAFTFAHRZEUG
FRONT-END MODULE FOR A MOTOR VEHICLE

(30) Priorité: 26.07.2011 FR 1156828
(43) Date de publication de la demande: 04.06.2014
(73) Titulaire: Valeo Systèmes Thermiques, 78321 Le Mesnil Saint Denis (FR)
(72) Inventeur: GUYOMARD, Jean-Nicolas, F-27930 Le Mesnil Fuguet (FR); CAMARGO, Leonardo, 49600-590 Stella Maris Salvador (BR)
(74) Mandataire: Metz, Gaëlle
(86) Numéro de dépôt international: PCT/EP2012/064498
(87) Numéro de publication internationale: WO 2013/014154

(56) Documents cités:
- EP-A1- 1 481 878
- EP-A2- 1 398 199
- WO-A1-03/051704
- FR-A1- 2 825 964
- FR-A1- 2 888 197

## Description

La présente invention concerne le domaine des modules de face avant de véhicules automobiles, et plus précisément les modules de face avant de véhicules automobiles composées de plusieurs parties distinctes.

Une face avant (EP1481878) est un élément de structure susceptible d'intégrer divers équipement du véhicule automobile tels que les projecteurs, clignotants, avertisseur sonore, échangeur thermique, module de refroidissement, etc.

La face avant, ainsi pourvue de ses équipements, constitue un module unitaire pouvant être préparé et livré par un équipementier et prêt à être monté sur un véhicule automobile en cour de montage par le constructeur. Le montage de face avant se fait par raccordement aux éléments du châssis du véhicule, tels que les longerons, puis mise en place d'un pare-choc ou bouclier frontal rapporté sur le module.

Une face avant comporte généralement une pièce support pour un où plusieurs radiateurs ou modules de refroidissement, pour les projecteurs avant, et une poutre pare-choc qui participe à la protection des équipements du module en cas de choc frontal. Ces composants sont fixés entre eux de façon rigide afin de maintenir la géométrie et la cohésion de l'ensemble. Afin de mieux répondre a des contraintes techniques de fabrication et économiques, il est connu de segmenter la pièce support en différentes parties fixées les unes aux autres de façon rigide. Il est ainsi connu d'avoir des pièces support comportant une traverse inférieure avec des montants latéraux, une traverse supérieure fixée entre ou au sommet des montants latéraux et des supports de projecteurs fixés aux extrémités de la traverse supérieure et/ou sur les montants latéraux.

Lors d'un choc, ses différentes parties peuvent subir des contraintes de torsion et de cisaillement pouvant conduire à la rupture des ses pièces et/ou la rupture de leurs fixations. La rupture de la pièce support peut ainsi contraindre à l'immobilisation du véhicule automobile du fait de la possible détérioration des éléments supportés, notamment lié au module de refroidissement, et cela augmente de fait les coûts de réparation.

Un des buts de l'invention est donc de remédier au moins partiellement aux inconvénients de l'art antérieur et de proposer un module de face avant de véhicule automobile susceptible de limiter la rupture de la pièce support en cas de choc.

La présente invention concerne donc un module de face avant de véhicule automobile comportant une pièce support, ladite pièce support comprenant deux supports de projecteurs chacun fixés sur un coté distinct de la pièce support, ledit support de projecteur comportant un moyen de fixation à une zone de fixation de la pièce support formant un axe de fixation autour duquel ledit support de projecteur peut pivoter par rapport à la pièce support en cas de choc.

Selon un aspect de l'invention, chacune des zones de fixation comporte une platine de fixation perpendiculaire à l'axe longitudinal de la pièce support, ladite platine de fixation comportant une encoche oblongue dont l'ouverture est dirigée vers l'avant du véhicule et que chaque support de projecteur est fixé sur ladite platine de fixation.

Selon un autre aspect de l'invention, chaque support de projecteur comporte un élément de rotation situé sur l'axe de fixation et que chacune des zones de fixation comporte un logement complémentaire audit élément de rotation et ouvert vers l'avant du véhicule, dans lequel vient se loger ledit élément de rotation et épousant la forme dudit élément de rotation.

Selon un autre aspect de l'invention, l'élément de rotation est un élément cylindrique dont l'axe de symétrie se confond avec l'axe de fixation.

Selon un autre aspect de l'invention, l'élément de rotation est élément cylindrique tronqué comportant au moins une facette plane, ladite au moins une facette plane étant située sur la portion de l'élément cylindrique tronqué venant dans le logement complémentaire.

Selon un autre aspect de l'invention, l'élément rotation comporte un pion de positionnement perpendiculaire à l'axe de fixation et que le logement complémentaire comporte un orifice de positionnement, ledit pion venant s'insérer dans ledit orifice de positionnement.

Selon un autre aspect de l'invention, le pion de positionnement vient de matière avec l'élément de rotation.

Selon un autre aspect de l'invention, le pion de positionnement est une pièce indépendante fixée à l'élément de rotation.

Selon un autre aspect de l'invention, les zones de fixations sont situées aux extrémités d'une traverse supérieure de la pièce support.

Selon un autre aspect de l'invention, les zones de fixations sont situées sur les montants latéraux de la pièce support.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un module de face avant,
- la figure 2 montre une représentation schématique de la zone de fixation d'un support de projecteur sur la pièce support,
- la figure 3 montre une représentation schématique d'un support de projecteur,
- les figures 4a et 4b montrent une représentation schématique des déplacements et forces appliqués à un projecteur lors d'un choc frontal,
- les figures 5a et 5b montrent une représentation schématique des déplacements et forces appliqués à un module de face avant lors d'un choc frontal,
- les figures 6a à 6c montrent une représentation schématique des déplacements et forces appliqués au niveau de la liaison entre la pièce support et le support de projecteur lors d'un choc frontal.

Les éléments identiques sur les différentes figures portent des références identiques.

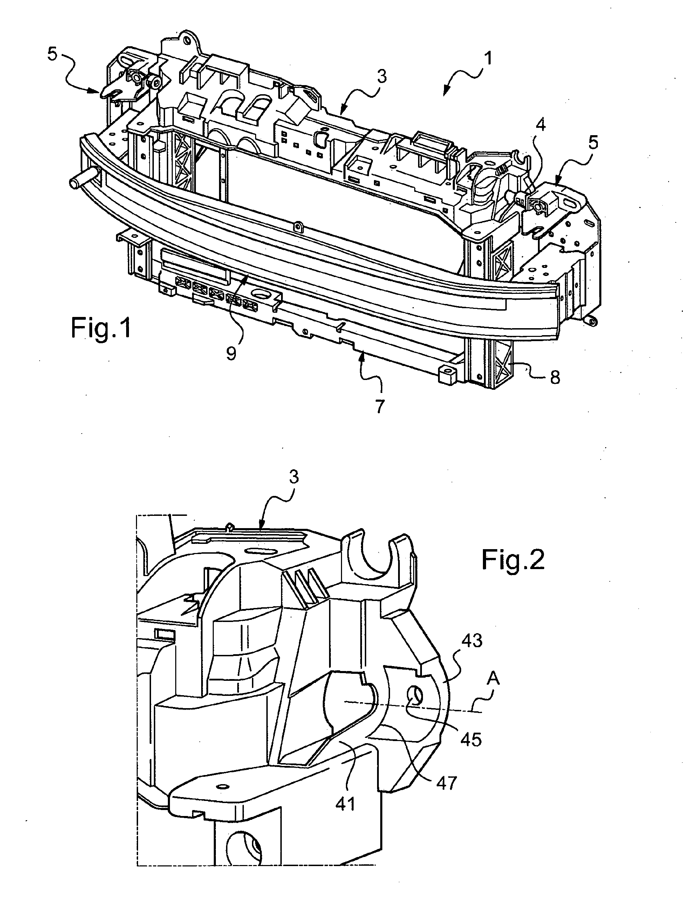

La figure 1 montre une représentation schématique d'un module de face avant 1. Ledit module de face avant 1 comporte une pièce support 3, 7, 8 sur laquelle peut être fixé des éléments tels que des modules de refroidissement (non représenté). Ladite pièce support 3, 7, 8 comporte une traverse inférieure 7, des montants latéraux 8 et une traverse supérieure 3. Ces différentes éléments peuvent être d'un seul tenant ou bien être des pièces indépendantes les une des autre et fixées entre elles. Ainsi, la traverse supérieure 3 peut être indépendante et être fixée au sommet des montants latéraux 8. Les montants latéraux 8 et la traverse inférieure 7 peuvent également former une seule et même pièce, ladite pièce ayant ainsi une forme générale en « U ».

Le module de face avant 1 comporte également à chacun de ses côtés, des supports de projecteur 5. Lesdits supports de projecteurs 5 sont fixés à la pièce support 3, 7, 8 sur une zone de fixation 4 dédiée ainsi qu'au châssis du véhicule. Ladite zone de fixation 4 pouvant être aussi bien située au niveau de la traverse supérieure 3 (comme montré sur la figure 1) ou des montants latéraux 8.

Le module de face avant 1 peut également comporter une poutre pare-choc 9 qui participe à la protection des composants du module en cas de choc frontal.

La figure 2 montre une représentation schématique de la zone de fixation d'un support de projecteur 5 sur la pièce support 3, 7, 8. Ladite zone de fixation 4 comporte une platine 41 de fixation perpendiculaire à l'axe longitudinal de la pièce support 3, 7, 8, sur laquelle vient se fixer le support de projecteur 5. Pour cela la platine 41 comporte une encoche 47 oblongue dont l'ouverture est dirigée vers l'avant du véhicule et dans laquelle passe un élément de fixation permettant la fixation du support de projecteur 5 selon un axe de fixation A, par exemple une vis. La zone de fixation 4 comporte également un logement 43 ouvert vers l'avant du véhicule.

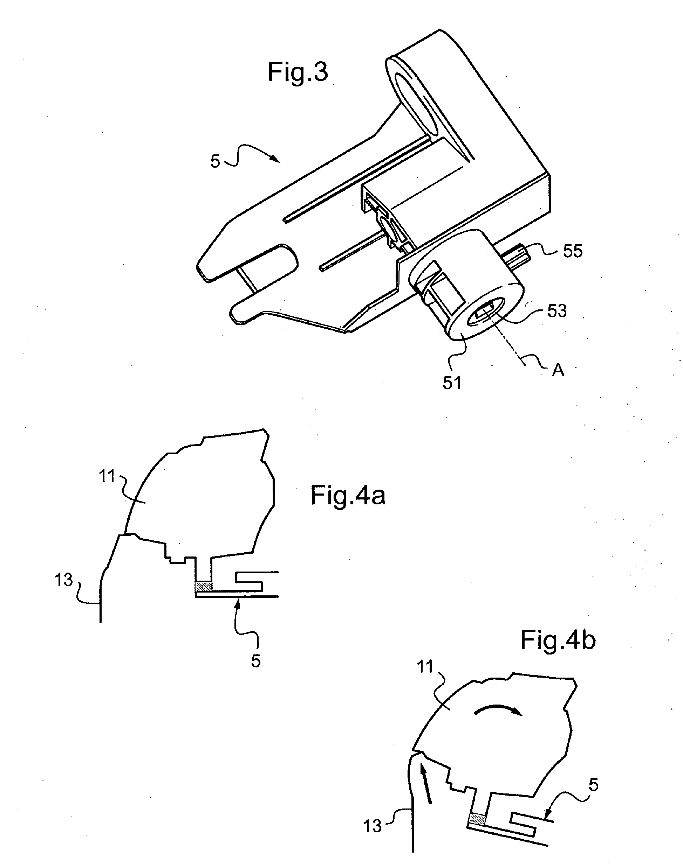

La figure 3 montre une représentation schématique d'un support de projecteur 5. Ledit support de projecteur 5 comporte notamment un moyen de fixation 53 permettant la fixation du support de projecteur 5 sur platine 41 de la zone de fixation 4. Le moyen de fixation 53 peut par exemple être un orifice 53 taraudé, comme représenté par la figure 3, pouvant recevoir une vis ou encore une tige fileté pouvant recevoir un boulon, cela permet la fixation du support de projecteur 5 au niveau de l'encoche 47 oblong de la platine 41.

La fixation du support de projecteur 5 sur la zone de fixation 4 grâce au moyen de fixation 53 défini ainsi un axe de fixation A autour duquel ledit support de projecteur 5 peut subir une rotation. Le moyen de fixation 53 peut également être un insert métallique ou autre système de fixation connu de l'homme du métier, définissant un axe de fixation A entre la zone de fixation 4 et le support de projecteur 5.

Le support de projecteur 5 comporte en outre un élément de rotation 51 situé sur l'axe de fixation A. lorsque le support de projecteur est fixé sur la zone de fixation 4, l'élément de rotation 51 vient s'insérer dans le logement 43 complémentaire, ledit logement 43 épousant la forme dudit élément de rotation 51. Cet élément de rotation 51, étant situé sur l'axe de fixation A, permet d'absorber les contraintes de pivotement du support de projecteur 5 autour dudit axe de fixation A.

Comme montré par les figures 2 et 3, l'élément de rotation 51 peut avoir une forme cylindrique et le logement 43 peut être par conséquent semi-cylindrique afin de pouvoir l'accueillir.

L'élément de rotation 51 peut comporter un élément de positionnement 55, perpendiculaire à l'axe de fixation A. Cet élément de positionnement 55 permet le bon positionnement du support de fixation 5 sur la zone de fixation 4 et par conséquent le positionnement du support de fixation 5 par rapport à la pièce support 3, 7, 8.

Comme montré par les figures 2 et 3, l'élément de positionnement 55 peut être un pion 55 qui lorsque l'élément de rotation 51 est dans le logement 43, vient s'insérer dans un orifice 45 situé à l'intérieur dudit logement 43. Le pion 55 peut être fait de matière avec l'élément de rotation 51 ou alors ledit pion 55 peut être une pièce indépendante, fixée sur l'élément de rotation 51 et pouvant ainsi être remplacée en cas de casse.

Un autre mode de réalisation (non représenté) de l'élément de positionnement 55 peut être que l'élément de rotation 51 ait une forme cylindrique troquée avec au moins une facette plane. La ou les facettes planes étant situées sur la portion de l'élément de rotation 51 venant dans le logement 43 complémentaire épousant la forme cylindrique tronquée de l'élément de rotation 51. Par exemple, l'élément de rotation 51 peut avoir une forme octogonale et le logement 43 reprendre en négatif cette forme.

Le support de projecteur 5 comporte également au moins un moyen de fixation du projecteur (non représenté) ainsi qu'au moins un moyen de fixation au châssis du véhicule (non représenté). Ledit projecteur peut en outre être également fixé à la pièce support 3, 7, 8 ainsi qu'a une aile du véhicule automobile.

Les figures 4a et 4b montrent en vue de côté les déplacements et mouvements subis par un projecteur 11 fixé sur son support de projecteur 5 et par un bouclier avant 13 de véhicule automobile. La figure 4a montre l'ensemble de ces éléments en position, avant un choc frontal, et la figure 4b après le choc frontal.

Le choc entraine une déformation vers l'arrière du bouclier 13, c'est-à-dire en direction du compartiment moteur, cette déformation du bouclier imprimant une force et un mouvement de pivotement vers le haut, c'est-à-dire vers le capot du véhicule, du projecteur 11 et du support de projecteur 5 sur lequel il est fixé.

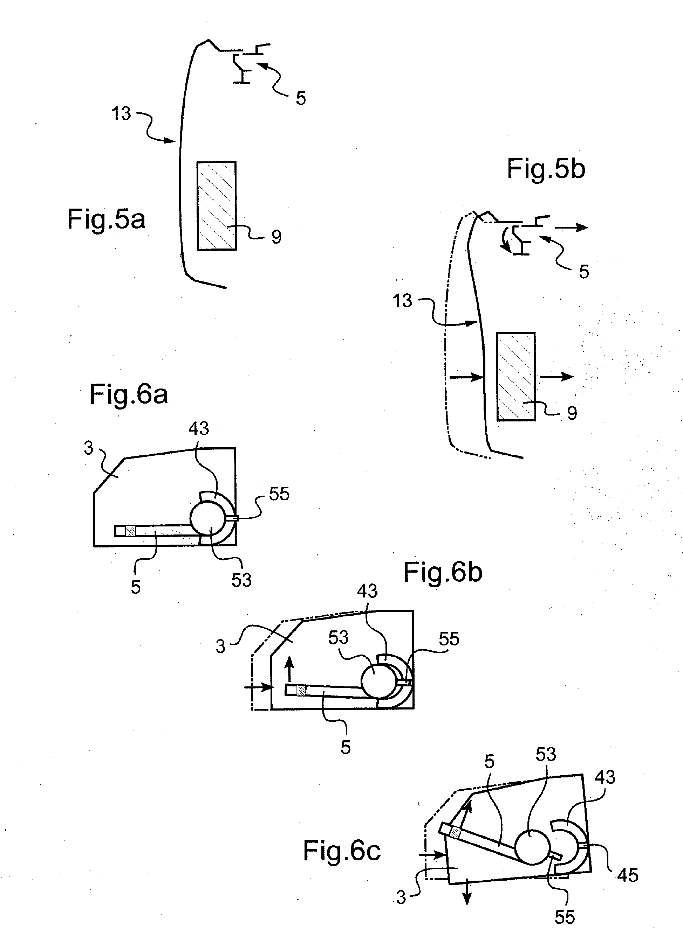

Les figures 5a et 5b montrent quand à elle une représentation schématique en vue de côté des déplacements et forces subi par un bouclier avant 13 de véhicule automobile, une poutre pare-choc 9 et une pièce support 3, 7, 8, plus particulièrement ici par la traverse supérieure 3, lors d'un choc frontal. La figure 5a montre l'ensemble de ces éléments en position avant un choc frontal, et la figure 5b après le choc frontal.

Le choc ici entraine une déformation vers l'arrière du bouclier 13, un mouvement vers l'arrière de la poutre pare-choc 9 ainsi qu'un mouvement vers l'arrière et de pivotement vers le bas de la traverse supérieure 3.

Les mouvements de pivotement du support de projecteur 5 et de la pièce support 3, 7, 8 sont donc opposés et le module de face avant 1 selon l'invention permet une absorption de ces mouvements opposés.

Les figures 6a à 6c montrent une représentation schématique vue de côté des déplacements et forces appliqués au niveau de la liaison entre la pièce support 3, 7, 8, plus particulièrement la traverse supérieure 3 et le support de projecteur 5 permettant l'absorption de ces mouvements opposés lors d'un choc frontal.

La figure 6a montre ces différentes pièces positionnées l'une par rapport à l'autre en condition de roulage. Le support de projecteur 5 est fixé sur la platine 41 au niveau de l'encoche 47 grâce au moyen de fixation 53. L'élément de rotation 51 est inséré dans le logement 43.

Dans l'exemple montré par ces figures, l'élément de positionnement 55 du support de projecteur 5 est un pion 55 inséré dans l'orifice 45 du logement 43.

Au début du choc frontal (figure 6b), la traverse supérieure 3 subit un mouvement de recul vers l'arrière, c'est-à-dire vers le compartiment moteur, et le support de projecteur 5 reste à sa position du fait qu'il soit fixé au châssis du véhicule. Grâce à l'encoche 47 et au moyen de fixation 43, la traverse supérieure 3 peut reculer vers le compartiment moteur alors que le support de projecteur 5 reste immobile en translation du fait de sa fixation au châssis du véhicule.

Ces deux pièces ont ainsi des mouvements opposés et du fait qu'elles puissent bouger indépendamment l'une de l'autre tout en restant fixées l'une à l'autre, il n'y a pas rupture de la fixation et/ou de l'une des deux pièces.

Du fait de mouvement vers l'arrière de la traverse supérieure 1, l'élément de rotation 51 se désengage du logement 43. Le support de projecteur 5 subit également un mouvement de pivotement vers le haut, c'est-à-dire vers le capot du véhicule, qui est absorbé du fait que le support de projecteur 5 puisse tourner autour de l'axe de fixation A.

Dans le cas où l'élément de positionnement 55 est un pion, il peut subir des contraintes importantes, notamment en cas de choc à grande vitesse, et céder du fait du pivotement du support de projecteurs alors qu'il est toujours en partie inséré dans son orifice 45.

Plus loin dans le déroulement du choc frontal (figure 6c), l'amplitude des mouvements vers l'arrière de la traverse supérieure 3 et l'amplitude de la rotation vers le haut du support de projecteur 5 sont plus importantes. La traverse supérieure 3 subit en outre un mouvement de pivotement vers le bas autour de l'axe de fixation A et contraire au mouvement de pivotement vers le haut autour de l'axe de fixation A du support de projecteur 5.

On voit donc bien que la possibilité qu'ont la pièce support 3, 7, 8, et les supports de projecteur 5 de pouvoir avoir des mouvements opposés du fait d'un choc, permet de se prémunir d'une rupture éventuelle d'une ou de plusieurs de ces pièces et donc de permettre une diminution des coûts de réparation ainsi qu'éventuellement de l'immobilisation du véhicule du fait du choc et de l'endommagement d'équipements supportés par la pièce support 3, 7, 8.

## Revendications

1. Module de face avant (1) de véhicule automobile comportant une pièce support (3, 7, 8), ladite pièce support (3, 7, 8) comprenant deux supports de projecteurs (5) chacun fixés sur un coté distinct de la pièce de support (3, 7, 8)de ses cotés, ledit support de projecteur (5) comportant un moyen de fixation (53) à une zone de fixation (4) de la pièce support (3, 7, 8) formant un axe de fixation (A) autour duquel ledit support de projecteur (5) peut pivoter par rapport à la pièce support (3, 7, 8) en cas de choc **caractérisé en ce que** chacune des zones de fixation (4) comporte une platine (41) de fixation perpendiculaire à l'axe longitudinal de la pièce support (3, 7, 8), ladite platine (41) de fixation comportant une encoche (47) oblongue dont l'ouverture est dirigée vers l'avant du véhicule et que chaque support de projecteur (5) est fixé sur ladite platine (41) de fixation.

2. Module de face avant (1) de véhicule automobile selon la revendication 1, **caractérisé en ce que** chaque support de projecteur (5) comporte un élément de rotation (51) situé sur l'axe de fixation (A) et que chacune des zones de fixation (4) comporte un logement (43) complémentaire audit élément de rotation (51) et ouvert vers l'avant du véhicule, dans lequel vient se loger ledit élément de rotation (51) et épousant la forme dudit élément de rotation (51).

3. Module de face avant (1) de véhicule automobile selon la revendication précédente, **caractérisé en ce que** l'élément de rotation (51) est un élément cylindrique dont l'axe de symétrie se confond avec l'axe de fixation (A).

4. Module de face avant (1) de véhicule automobile selon la revendication 2, **caractérisé en ce que** l'élément de rotation (51) est élément cylindrique tronqué comportant au moins une facette plane, ladite au moins une facette plane étant située sur la portion de l'élément cylindrique tronqué venant dans le logement (43) complémentaire.

5. Module de face avant (1) de véhicule automobile selon l'une des revendications 2 à 4, **caractérisé en ce que** l'élément rotation (51) comporte un pion (55) de positionnement perpendiculaire à l'axe de fixation (A) et que le logement (43) complémentaire comporte un orifice de positionnement (45), ledit pion (55) venant s'insérer dans ledit orifice de positionnement (45).

6. Module de face avant (1) de véhicule automobile selon la revendication 5, **caractérisé en ce que** le pion (55) de positionnement vient de matière avec l'élément de rotation (51).

7. Module de face avant (1) de véhicule automobile selon la revendication 5,, **caractérisé en ce que** le pion (55) de positionnement est une pièce indépendante fixée à l'élément de rotation (51).

8. Module de face avant (1) de véhicule automobile selon l'une des revendications précédentes, **caractérisé en ce que** les zones de fixation (4) sont situées aux extrémités d'une traverse supérieure (3) de la pièce support (3, 7, 8).

9. Module de face avant (1) de véhicule automobile selon l'une des revendications 1 à 7, **caractérisé en ce que** les zones de fixation (4) sont situées sur les montant latéraux (8) de la pièce support (3 ; 7 ; 8).

## Patentansprüche

1. Kopfmodul (1) für ein Kraftfahrzeug, umfassend ein Stützteil (3, 7, 8), wobei das Stützteil (3, 7, 8) zwei Scheinwerferstützen (5) umfasst, die jeweils auf einer unterschiedlichen Seite des Stützteils (3, 7, 8) auf seinen Seiten befestigt sind, wobei die Scheinwerferstütze (5) ein Mittel (53) zur Befestigung an einer Befestigungszone (4) des Stützteils (3, 7, 8) umfasst, das eine Befestigungsachse (A) bildet, um die die Scheinwerferstütze (5) im Verhältnis zum Stützteil (3, 7, 8) im Falle eines Aufpralls schwenken kann, **dadurch gekennzeichnet, dass** jede der Befestigungszonen (4) eine Befestigungsplatte (41) senkrecht zur Längsachse des Stützteils (3, 7, 8) umfasst, wobei die Befestigungsplatte (41) eine längliche Kerbe (47) umfasst, deren Öffnung nach vorne zum Fahrzeug gerichtet ist, und dass jede Scheinwerferstütze (5) auf der Befestigungsplatte (41) befestigt ist.

2. Kopfmodul (1) für ein Kraftfahrzeug nach Anspruch 1, **dadurch gekennzeichnet, dass** jede Scheinwerferstütze (5) ein Drehelement (51) umfasst, das auf der Befestigungsachse (A) angeordnet ist, und dass jede der Befestigungszonen (4) eine Lagerung (43), die komplementär zu dem Drehelement (51) und nach vorne zum Fahrzeug offen ist, umfasst, in der das Drehelement (51) angeordnet wird, und die an die Form des Drehelements (51) angepasst ist.

3. Kopfmodul (1) für ein Kraftfahrzeug nach dem vorhergehenden Anspruch, **dadurch gekennzeichnet, dass** das Drehelement (51) ein zylindrisches Element ist, dessen Symmetrieachse mit der Befestigungsachse (A) zusammenfällt.

4. Kopfmodul (1) für ein Kraftfahrzeug nach Anspruch 2, **dadurch gekennzeichnet, dass** das Drehelement (51) ein kegelstumpfartiges zylindrisches Element ist, umfassend mindestens eine ebene Fläche, wobei sich die mindestens eine ebene Fläche auf dem Abschnitt des kegelstumpfartigen zylindrischen Elements befindet, der in der komplementären Lagerung (43) angeordnet ist.

5. Kopfmodul (1) für ein Kraftfahrzeug nach einem der Ansprüche 2 bis 4, **dadurch gekennzeichnet, dass** das Drehelement (51) einen Positionierstift (55) senkrecht auf die Befestigungsachse (A) umfasst, und dass die komplementäre Lagerung (43) eine Positionieröffnung (45) umfasst, wobei der Stift (55) in die Positionieröffnung (45) eingesetzt wird.

6. Kopfmodul (1) für ein Kraftfahrzeug nach Anspruch 5, **dadurch gekennzeichnet, dass** der Positionierstift (55) mit dem Drehelement (51) aus einem Stück ist.

7. Kopfmodul (1) für ein Kraftfahrzeug nach Anspruch 5, **dadurch gekennzeichnet, dass** der Positionierstift (55) ein unabhängiges Teil ist, das an dem Drehelement (51) befestigt ist.

8. Kopfmodul (1) für ein Kraftfahrzeug nach einem der vorhergehenden Ansprüche, **dadurch gekennzeichnet, dass** die Befestigungszonen (4) an den Enden einer oberen Querstrebe (3) des Stützteils (3, 7, 8) angeordnet sind.

9. Kopfmodul (1) für ein Kraftfahrzeug nach einem der Ansprüche 1 bis 7, **dadurch gekennzeichnet, dass** die Befestigungszonen (4) auf den seitlichen Ständern (8) des Stützteils (3, 7, 8) angeordnet sind.

## Claims

1. Front-end module (1) for a motor vehicle comprising a support part (3, 7, 8), said support part (3, 7, 8) comprising two headlight supports (5) each fastened onto a distinct side of the support part (3, 7, 8) on its sides, said headlight support (5) including a means (53) for fastening to a fastening area (4) of the support part (3, 7, 8) forming a fastening axis (A) around which said headlight support (5) can pivot relative to the support part (3, 7, 8) in the event of an impact, **characterized in that** each of the fastening areas (4) includes a fastening plate (41) at right angles to the longitudinal axis of the support part (3, 7, 8), said fastening plate (41) including an oblong notch (47) whose opening is directed toward the front of the vehicle and that each headlight support (5) is fastened to said fastening plate (41).

2. Front-end module (1) for a motor vehicle according to Claim 1, **characterized in that** each headlight support (5) includes a revolution component (51) situated on the fastening axis (A) and that each of the fastening areas (4) includes a recess (43) complementing said revolution component (51) and open toward the front of the vehicle, in which said revolution component (51) is housed and which closely follows the form of said revolution component (51).

3. Front-end module (1) for a motor vehicle according to the preceding claim, **characterized in that** the revolution component (51) is a cylindrical component whose axis of symmetry is merged with the fastening axis (A).

4. Front-end module (1) for a motor vehicle according to Claim 2, **characterized in that** the revolution component (51) is a truncated cylindrical component including at least one planar facet, said at least one planar facet being situated on the portion of the truncated cylindrical component that fits into the complementary recess (43).

5. Front-end module (1) for a motor vehicle according to one of Claims 2 to 4, **characterized in that** the revolution component (51) includes a positioning pin (55) at right angles to the fastening axis (A) and that the complementary recess (43) includes a positioning orifice (45), said pin (55) being inserted into said positioning orifice (45).

6. Front-end module (1) for a motor vehicle according to Claim 5, **characterized in that** the positioning pin (55) is part of the same material as the revolution component (51).

7. Front-end module (1) for a motor vehicle according to Claim 5, **characterized in that** the positioning pin (55) is an independent part fastened to the revolution component (51).

8. Front-end module (1) for a motor vehicle according to one of the preceding claims, **characterized in that** the fastening areas (4) are situated at the ends of a top crossmember (3) of the support part (3, 7, 8).

9. Front-end module (1) for a motor vehicle according to one of Claims 1 to 7, **characterized in that** the fastening areas (4) are situated on the side uprights (8) of the support part (3; 7; 8).
